# EUROPÄISCHE PATENTSCHRIFT

(11) **EP 1 190 615 B1**
(45) Veröffentlichungstag und Bekanntmachung des Hinweises auf die Patenterteilung: **01.08.2007**
(21) Anmeldenummer: 01122259.3
(22) Anmeldetag: 18.09.2001
(51) Int. Cl.: A01C 17/00

(54) **Zentrifugaldüngerstreuer**
Centrifugal fertiliser spreader
Epandeur centrifuge pour engrais

(30) Priorität: 22.09.2000 DE 10047008; 05.04.2001 DE 10116950
(43) Veröffentlichungstag der Anmeldung: 27.03.2002
(73) Patentinhaber: Amazonen-Werke H. Dreyer GmbH & Co. KG, 49205 Hasbergen (DE)
(72) Erfinder: Dreyer, Heinz, Dr. Dipl.-Ing., 49205 Hasbergen (DE); Dreyer, Justust, Dipl.-Ing., 49205 Hasbergen (DE); Lührmann, Johannes, 49134 Wallenhorst (DE); Kleine-Ausberg, Peter, Dipl.-Ing., 49186 Bad Iburg (DE); Walter, Achim, 49078 Osnabrück (DE)

(56) Entgegenhaltungen:
- EP-A- 0 532 055
- EP-A- 0 551 949
- EP-A- 0 702 889

## Beschreibung

Die Erfindung betrifft einen Zentrifugaldüngerstreuer, der die Düngemittel mittels Schleuderscheiben fächerartig über die zu bestreuende Fläche verteilt.

Durch die EP 07 02 889 A2 ist ein Zentrifugaldüngerstreuer bekannt, der die Düngemittel mittels Schleuderscheiben fächerartig über die zu bestreuende Fläche verteilt. Die Schleuderscheiben werden bei diesem Streuer in einem entgegen gesetzten Drehsinn angetrieben. Ein Teil der von den Schleuderscheiben abgeworfenen Partikeln wird mittels von den Schleuderscheiben weggerichteten Leitelementen einer Grenzstreuleiteinrichtung in eine bestimmte Richtung umgelenkt. Die Leitelemente nehmen die Umlenkung so vor, dass ein Streubild mit einer zur Grenze steil abfallenden Streuflanke erzeugt und die Wurfweite der Düngerpartikel im Grenzbereich begrenzt wird. Des Weiteren ist die Grenzstreuleiteinrichtung derart angeordnet, dass sie auf einem zumindest annähernd zu der Drehachse der Schleuderscheibe konzentrischen Kreis gegenüber der Schleuderscheibe zu verschieben ist und die Leitelemente sind in zwei unterschiedlichen Positionen zur Schleuderscheibe einstellbar.

Ein weiterer Zentrifugaldüngerstreuer ist beispielsweise in der deutschen Offenlegungsschrift 198 43 747 beschieben. Dieser Zentrifugaldüngerstreuer ist mit einer Leitelemente aufweisenden Grenzstreueinrichtung zur Erzeugung eines Streubildes mit einer zur Grenze steil abfallenden Streuflanke zur Begrenzung der Wurfweite der Düngerpartikel im Grenzbereich ausgestattet. Um unterschiedliche Grenzstreuabstände bzw. unterschiedliche Streuarten, wie Randstreuen oder Grenzstreuen einstellen zu können, wird die Grenzstreueinrichtung auf einem Kreisbogen zur Schleuderscheibe verschoben. Eine derartige Verstellung hat sich für Düngerstreuer bei Arbeitsbreiten bis zum 24 m bzw. 30 m bewährt.

Der Erfindung liegt die Aufgabe zugrunde für das Grenz- bzw. Randstreuen eine Grenzstreueinrichtung zu schaffen, die für verschiedene Arbeitsbreiten und für verschiedene Düngersorten einstellbar ist.

Diese Aufgabe wird erfindungsgemäß durch die Merkmale des Anspruches 1 gelöst.

Infolge dieser Maßnahme ergibt sich eine vorteilhafte Einstellung der Grenzstreueinrichtung, die für ihre beiden Einstellmöglichkeiten optimal auf die beiden vorgesehenen Einsatzverhältnisse einstellbar ist.

Hier wird ein Streuer vorgeschlagen, welcher insbesondere für große Arbeitsbreiten eingesetzt wird. Die Grenzstreueinrichtung wird hier zu einer Einrichtung einsetzbar, welche den Streufächer derart begrenzt, dass die Partikel nicht nach vorne im Wesentlichen über die durch den vorderen Bereich des Schleuderdüngerstreuers begrenzten Ebene, die senkrecht zur Fahrtrichtung verläuft, hinausgeworfen wird. Die Grenzstreueinrichtung kann mittels der vorgesehenen Einstellyorrichtungen in unterschiedliche Positionen oder Abständen zur Schleuderscheibe eingestellt werden. Hierbei hat es sich als besonders vorteilhaft herausgestellt, wenn die Leiteinrichtung um eine aufrechte Achse verschwenkbar ist. In bevorzugter Weise ist vorgesehen, dass die aufrechte Achse, bezogen auf die Fahrtrichtung sich im hinteren Bereich der Leiteinrichtung befindet.

Weiterhin ist vorgesehen, dass die Leiteinrichtung zum Grenzstreuen aus zwei Teilelementen besteht, wobei der der ersten Leiteinrichtung abgewandte Teil von dem ersten Teil abnehmbar angeordnet ist. Dieses abnehmbare Teil wird dann abgenommen, wenn die Grenzstreueinrichtung für große Arbeitsbreiten von insbesondere mehr ab 40 bzw. 42 bis 48 m eingesetzt werden soll.

Weiterhin wird die Leiteinrichtung für das Grenzstreuen bei Düngerstreuern eingesetzt, die keine Leiteinrichtung zur Begrenzung des Streufächers aufweisen. Diese Grenzstreueinrichtung kann in unterschiedlichen Positionen oder Abständen zur Schleuderscheibe einstellbar sein, damit die Grenzstreuleiteinrichtung auf die gewünschte Arbeitsbreite für den auszubringenden Dünger einstellbar ist. Die Grenzstreueinrichtung ist um eine aufrechte Achse verschwenkbar, die in bevorzugter Weise, bezogen auf die Fahrtrichtung sich in hinteren Bereich der Grenzstreuleiteinrichtung befindet.

Die Grenzstreuleiteinrichtung besteht aus zwei Teilelementen, wobei der hintere Teil von dem vorderen Teil abnehmbar angeordnet ist. Insbesondere bei großen Arbeitsbreiten von 40m und mehr wird man das abnehmbare Teil von der Grenzstreuleiteinrichtung abnehmen. Dieses abnehmbare Teil kommt also bei Arbeitsbreiten, insbesondere unter 40m zum Einsatz.

Weitere Einzelheiten der Erfindung sind der Beispielsbeschreibung und den Zeichnungen zu entnehmen. Hierbei zeigen
- Fig. 1: die Anordnung der Grenzstreueinrichtung an einem Schleuderstreuer in perspektivischer Darstellung und
- Fig. 2: eine vergrößerte Abbildung der Anordnung der Grenzstreueinrichtung ebenfalls in perspektivischer Darstellung und in Prinzipdarstellung.

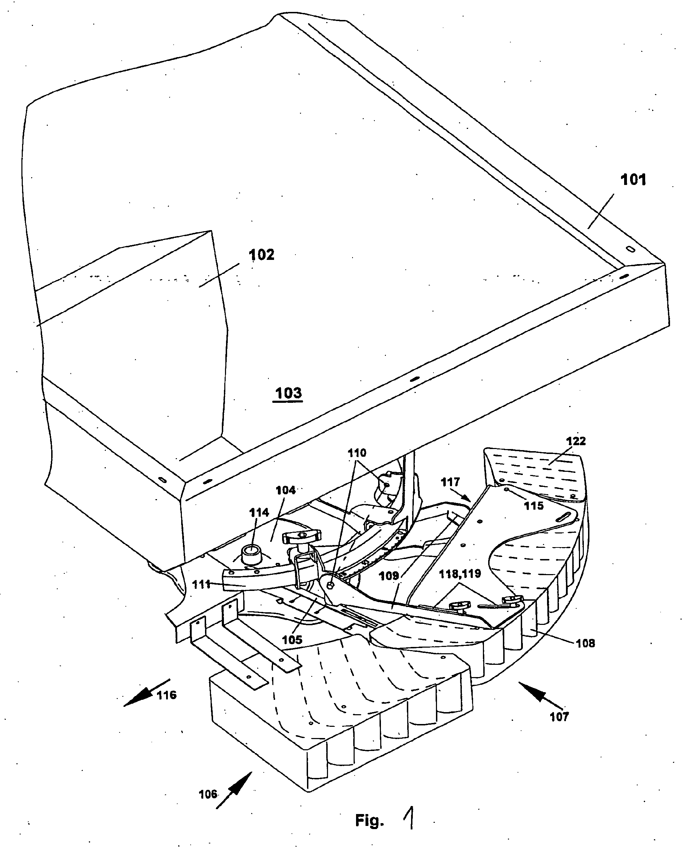

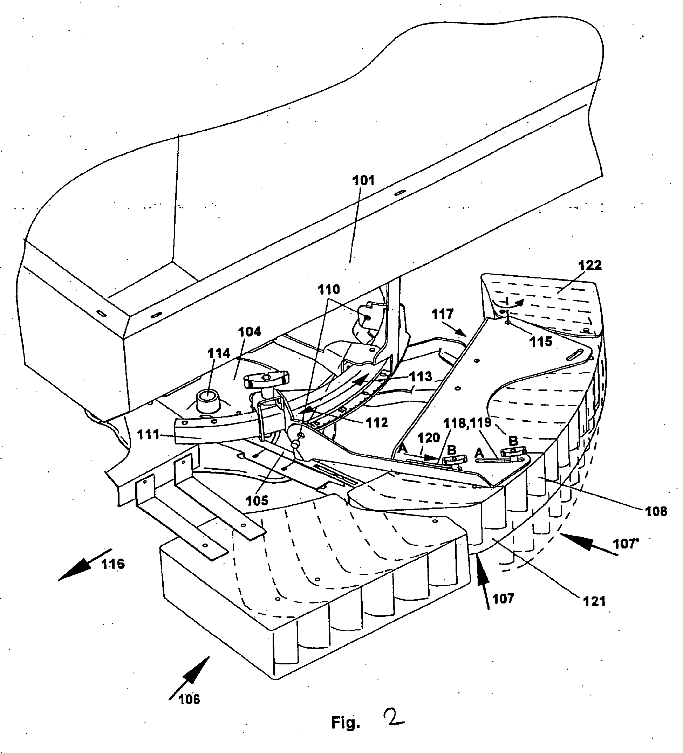

Der Schleuderstreuer weist den Vorratsbehälter 101 auf, der durch ein dachförmiges Mittelteil 102 in zwei Trichterhälften 103 unterteilt ist. Jeder Trichterhälfte wird durch ein einstellbares Dosierorgan abgeschlossen, welche das sich im Vorratsbehälter 1befindliche Düngemittel den beiden unterhalb der Dosierorgane rotierend angetriebenen Schleuderscheiben 104, die mit Wurfschaufeln 105 besetzt sind, zuführen. Außerhalb der Rotationsbahn der äußeren Enden der Wurfschaufeln 105 sind die beiden Leitvorrichtungen 106 und 107 angeordnet. Die vordere Leiteinrichtung 106 stellt gemäß dem EP 03 47 643 B1 sicher, dass kein Dünger über die durch die vordere Kante des Vorratsbehälters quer zur Fahrtrichtung verlaufenden Ebene begrenzten Linie Dünger abgeschleudert wird. Des weiteren ist die weitere Leiteinrichtung 107, die als Grenzstreuleiteinrichtung zur Erzeugung eines Streubildes mit einer zur Grenze steil abfallenden Streuflanke zur Begrenzung der Wurfweite der Düngerpartikel im Grenzbereich ausgebildet ist, angeordnet. Die Leitelemente 108 der Grenzstreuleiteinrichtung 107 sind in dem der Schleuderscheibe 104 zugewandten Bereiches etwa tangential zur Abwurfrichtung der Düngerkörner angeordnet und in dem sich anschließenden Bereich, die die Ablenkrichtung festlegt, gegenüber der ursprünglichen Abwurfrichtung in entgegengesetzter Drehrichtung der Wurfschaufeln 105 und nach hinten ablenkend angestellt. Die Grenzstreuleiteinrichtung 107 ist an einer Halterung 109 angeordnet und kann um die etwa horizontal verlaufende Achse 110 in den Düngerstrom zum Grenzstreuen eingeschwenkt, wie in den Fig. 1 und 2 gezeigt, oder nach oben oder nach unten aus dem Düngerstrom herausgeschwenkt werden, um zum Normalstreuen keine Beeinflussung auf die angeschleuderten Düngepartikel zu nehmen.

Die Halterung 109 ist an der kreisbogenförmigen Halterung 111, die aus dem Vierkantrohr besteht, in den beiden Richtungen 112 und 113, wie durch den Pfeile angeordnet ist, hin und her verschwenkbar. Durch diese Anordnung ist die Grenzstreuleiteinrichtung 107 auf einem zumindest annähernd der Drehachse 114 der Schleuderscheibe 104 konzentrischen Kreis gegenüber der Schleuderscheibe 104 in begrenztem Umfang hin und her verschiebbar.

Des weiteren ist die Grenzstreueinrichtung 107 an der Halterung 109 um die aufrechte Schwenkachse 115, die sich in Fahrtrichtung 116 gesehen auf der hinteren Seite 117 der Grenzstreueinrichtung 107 befindet, schwenkbar an dem am Rahmen bzw. den Vorratsbehälter 101 befestigt. Des weiteren kann mittels der durch ein Langloch 118 gebildete Einstellvorrichtung in Verbindung mit der als Schraube 119 ausgebildeten Arretierungseinrichtung die Grenzstreueinrichtung 107 in unterschiedlichen Abständen und Winkelstellungen zur Schleuderscheibe 104 eingestellt werden. Die Fig. 1 zeigt mit den dicken durchzogenen Linien die äußerste Einstellung der Grenzstreueinrichtung 107 für große Arbeitsbreiten und die mit dünnen Linien dargestellten nach innen geschwenkte Arbeitsstellung 107' für kleine Arbeitsbreiten. Wie der Pfeil 120 zeigt, wird die Grenzstreueinrichtüng 107 für große Grenzstreuabständen in die Stellung 107 " aus der Stellung 107' geschwenkt. Die Schwenkachse 115 verläuft in bevorzugter Weise zumindest annähernd senkrecht zur mittleren Streufächerebene, um so die Leitelement 108 in der Bauhöhe klein halten zu können. Durch die Ausrichtung der Schwenkachse 111 zu der Ebene der Abwurfebene der Düngerkörner im Streufächer, ist immer sichergestellt, dass die Leitelemente im vollen Umfange den Streufächer erfassen und entsprechend umlenken können.

Die Leitelemente 108 weisen, von ihrem Anfang bis nach außen gesehen, eine stetig steigende Krümmung auf.

Die Grenzstreueinrichtung 107 besteht aus den beiden Teilelementen 121 und 122. Der vordere Teil 121 der Leiteinrichtung 107 ist an der Halterung 109 angeordnet. Der abnehmbare Teil 122 ist an dem vorderen Teil 121 der Grenzstreuleiteinrichtung 107 befestigt. Somit ist also der der ersten Leiteinrichtung 106 abgewandte Teil 122 von dem vorderen Bereich 121 der Grenzstreuleiteinrichtung 107 abnehmbar. Die aufrechte Schwenkachse 115 der Grenzstreueinrichtung 107 befindet sich an dem der ersten Leiteinrichtung 106 benachbarten Teil 121 der Grenzstreuleiteinrichtung 107.

Selbstverständlich lässt sich die Grenzstreuleiteinrichtung 107 auch an einem Schleuderdüngerstreuer einsetzen, bei dem die vordere Leiteinrichtung 106 zur Begrenzung des Streufächers nicht angeordnet ist.

Insbesondere bei großen Arbeitsbreiten wird das abnehmbare Teil 122 der Leiteinrichtung 107 von dem vorderen Teil 121 der Grenzstreuleiteinrichtung 107 abgenommen.

Des weiteren kann eine nicht.dargestellte elektronische Steuer- und/oder Regeleinrichtung vorgesehen sein, in welcher die Zusammenhänge zwischen die die Ausbringmenge bestimmenden Dosierorganeinstellung und die die Grenzstreubreite bestimmende Einstellung der Grehzstreueinrichtung 107 abgespeichert sind. Anhand dieser Zusammenhänge werden dann die Dosierorgane und die Grenzstreueinrichtung 107 zur Erreichung einer gewünschten gleichmäßigen Düngerverteilung über die jeweilige Grenzstreubreite entsprechend eingestellt. Hierzu ist dann zwischen der Halterung 109 und der Grenzstreueinrichtung 107 ein nicht dargestellter Stellmotor angeordnet, der mit der Steuer- und Regeleinrichtung verbunden ist und entsprechend angesteuert wird. Mit Hilfe dieses Stellmotors lässt sich dann in einfacher Weise die Grenzstreueinrichtung 107 automatisch einstellen. Durch die Ansteuerung der Dosierorgane und der Verknüpfung dieser Zusammenhänge wird gewährleistet, dass immer die entsprechende Düngemittelmenge ausgebracht wird, so dass weder Überdüngungen noch Unterdüngungen die Folge sind.

In nicht dargestellter Weise kann die Grenzstreueinrichtung 107 mittels einer als Anfahrschutz ausgebildeten Überlastsicherung, z.B. einem Federelement oder einer Abschersicherung am Rahmen befestigt sein. Es wird dann eine Beschädigung der Grenzstreueinrichtung 7 vermieden. Es ist dann lediglich erforderlich, falls eine Abschersicherung verwendet wird, diese zu ersetzen.

## Patentansprüche

1. Zentrifugaldüngerstreuer, der die Düngemittel mittels Schleuderscheiben (104) fächerartig über die zu bestreuende Fläche verteilt, wobei man die Schleuderscheiben (104) in entgegengesetztem Drehsinn zueinander antreibt und wobei man einen Teil der von den Schleuderscheiben (104) abgeworfenen Partikel mittels von den Schleuderscheiben (104) weggerichteten Leitelementen einer Grenzstreuleiteinrichtung in bestimmte Richtungen umlenkt,
wobei die Leitelemente (108) der Grenzstreuleiteinrichtung (107) die Umlenkung so vornehmen, dass ein Streubild mit einer zur Grenze steil abfallenden Streuflanke erzeugt und die der Wurfweite der Düngerpartikel im Grenzbereich begrenzt wird,
wobei die Grenzstreuleiteinrichtung (107) derart angeordnet ist, dass sie auch auf einem zumindest annähernd zu der Drehachse (114) der Schleuderscheibe (104) konzentrischen Kreis gegenüber der Schleuderscheibe (104) verschiebbar ist,
wobei die Leitelemente (108) der Grenzstreuleiteinrichtungen (107) in zumindest zwei unterschiedlichen Positionen (107',107") und/oder Abständen zur Schleuderscheibe (104) einstellbar sind,
wobei die Grenzstreuleiteinrichtung (107) zusätzlich zur Verschiebbarkeit auf einem konzentrischen Kreis um eine aufrechte Achse (115) verschwenkbar ist,
wobei die aufrechte Achse (115) sich im Bereich der Grenzstreuleiteinrichtung (107) befindet.

2. Vorrichtung nach Anspruch 1, **dadurch gekennzeichnet, dass** die Grenzstreuleiteinrichtung (107) in unterschiedlichen Positionen und/oder Abständen zur Schleuderscheibe (104) einstellbar ist.

3. Vorrichtung nach Anspruch 1, **dadurch gekennzeichnet, dass** die aufrechte Achse, bezogen auf die in Fahrtrichtung (116) sich im vorderen Bereich der Grenzstreuleiteinrichtung (107) befindet.

4. Vorrichtung nach Anspruch 1, **dadurch gekennzeichnet, dass** die aufrechte Achse (115), bezogen auf die Fahrtrichtung (116) sich im hinteren Bereich der Grenzstreueinrichtung (107) befindet.

5. Vorrichtung nach einem oder mehreren der vorstehenden Ansprüche, **dadurch gekennzeichnet, dass** die Grenzstreuleiteinrichtung (107) aus zwei Teilelementen (121,122) besteht, wobei der hintere Teil (122) von dem vorderen Teil (121) abnehmbar ausgebildet ist.

6. Vorrichtung nach Anspruch 3 und/oder 6, **dadurch gekennzeichnet, dass** die aufrechte Schwenkachse (115) sich an dem der vorderen Teil (121) der Leiteinrichtung (107) befindet.

7. Vorrichtung nach Anspruch 1, **dadurch gekennzeichnet, dass** zumindest zwei verschiedene Leitelemente (108) aufweisende Leiteinrichtungen (106,107) vorgesehen sind, welche getrennt und/oder gemeinsam in den Partikelstrom bringbar sind, dass die Leitelemente der einen Leiteinrichtung (106) die Umlenkung so vornehmen, dass die quer zur Fahrtrichtung (116) zwischen einer Schleuderscheibenachse (114) und dem Streufächerrand gemessene Streubreite des Streufächers zumindest annähernd unverändert bleibt, der von dem Streufächer aufgespannte Streuwinkelbereich aber verringert wird, wobei der verringerte Fächer mit einer vorderen Begrenzungslinie etwa quer zur Fahrtrichtung (116) des Streuers liegt.

8. Vorrichtung Anspruch 7, **dadurch gekennzeichnet, dass** die aufrechte Schwenkachse (115) sich an dem der ersten Leiteinrichtung (106) benachbarten Teil (121) der anderen Leiteinrichtung (107) befindet.

## Claims

1. Centrifugal fertiliser spreader, which distributes the fertilising agents in a fan-like manner over the surface to be covered by means of centrifugal discs (104), wherein the centrifugal discs (104) are driven in the opposite direction of rotation to one another, and wherein a portion of the particles, discharged by the centrifugal discs (104), are deflected into specific directions by means of guide elements of a boundary spreading guide means, which elements are directed away from the centrifugal discs (104),
wherein the guide elements (108) of the boundary spreading guide means (107) undertake the deflection so that a spreading pattern is produced with a spreading flank which descends steeply to the boundary, and the throwing range of the fertiliser particles is limited in the boundary region,
wherein the boundary spreading guide means (107) is disposed in such a manner that it is also displaceable relative to the centrifugal disc (104) around a circle which is at least approximately concentric with the rotary axle (114) of the centrifugal disc (104),
wherein the guide elements (108) of the boundary spreading guide means (107) can be set in at least two different positions (107', 107") and/or at at least two different spacings relative to the centrifugal disc (104),
wherein the boundary spreading guide means (107) is pivotable about a vertical axis (115), in addition to the displaceability around a concentric circle, and
wherein the vertical axis (115) is situated in the region of the boundary spreading guide means (107).

2. Apparatus according to claim 1, **characterised in that** the boundary spreading guide means (107) can be set in different positions and/or at different spacings relative to the centrifugal disc (104).

3. Apparatus according to claim 1, **characterised in that** the vertical axis, relative to the direction of travel (116), is situated in the front region of the boundary spreading guide means (107).

4. Apparatus according to claim 1, **characterised in that** the vertical axis (115), relative to the direction of travel (116), is situated in the rear region of the boundary spreading guide means (107).

5. Apparatus according to one or more of the preceding claims, **characterised in that** the boundary spreading guide means (107) comprises two part elements (121, 122), the rear part (122) being adapted to be removable from the front part (121).

6. Apparatus according to claim 3 and/or claim 6, **characterised in that** the vertical pivotal axis (115) is situated on the front part (121) of the guide means (107).

7. Apparatus according to claim 1, **characterised in that** at least two guide means (106, 107), having different guide elements (108), are provided, which can be brought separately and/or jointly into the particle stream, **in that** the guide elements of the one guide means (106) undertake the deflection so that the spreading width of the spreading fan, measured transversely relative to the direction of travel (116) between one centrifugal disc axle (114) and the spreading fan edge, remains at least approximately unchanged, but the spreading angular sector, spread-out from the spreading fan, is reduced, the reduced fan lying with a front boundary line substantially transversely relative to the direction of travel (116) of the spreader.

8. Apparatus according to claim 7, **characterised in that** the vertical pivotal axis (115) is situated on the part (121) of the other guide means (107) adjacent to the first guide means (106).

## Revendications

1. Epandeur centrifuge d'engrais distribuant des engrais à l'aide de disques d'épandage (104) suivant une répartition en éventail sur la surface à traiter, les disques d'épandage (104) étant entraînés suivant des sens de rotation opposés et une partie des particules éjectées par les disques d'épandage (104) étant déviée par des éléments de guidage d'une installation d'épandage en limite, pour être déviés dans des directions définies,
les éléments de guidage (107) de l'installation d'épandage en limite (107) assurant la déviation pour générer une image d'épandage avec un flanc d'épandage descendant, de façon abrupte vers la limite et ce flanc est limité par la portée d'éjection des particules d'engrais dans la zone d'épandage en limite,
l'installation d'épandage en limite (107) étant disposée pour coulisser par rapport au disque d'épandage (104) suivant au moins sensiblement un cercle concentrique à l'axe de rotation (114) du disque d'épandage (104),
les éléments de guidage (108) des installations d'épandage en limite (107) étant réglables dans des positions (107', 107") et/ou des distances différentes par rapport au disque d'épandage (104),
l'installation d'épandage en limite (107) pouvant en outre pivoter par rapport au coulissement sur un cercle concentrique autour d'un axe montant (115),
l'axe montant (115) étant situé dans la zone de l'installation d'épandage en limite (107).

2. Dispositif selon la revendication 1,
**caractérisé en ce que**
l'installation d'épandage en limite (107) se règle dans des positions et/ou des distances différentes par rapport au disque d'épandage (104).

3. Dispositif selon la revendication 1,
**caractérisé en ce que**
l'axe montant se trouve dans la zone avant de l'installation d'épandage en limite (107) par rapport à la direction de déplacement (116).

4. Dispositif selon la revendication 1,
**caractérisé en ce que**
l'axe montant (115) se trouve dans la zone arrière de l'installation d'épandage en limite (107) par rapport à la direction de déplacement (116).

5. Dispositif selon l'une quelconque des revendications précédentes,
**caractérisé en ce que**
l'installation d'épandage en limite (107) se compose de deux éléments partiels (121, 122),
la partie arrière (122) étant amovible de la partie avant (121).

6. Dispositif selon l'une quelconque des revendications 3 ou 6,
**caractérisé en ce que**
l'axe montant (115) se trouve sur la partie avant (121) de l'installation de guidage (107).

7. Dispositif selon la revendication 1,
**caractérisé par**
des installations de guidage (106, 107) ayant au moins deux éléments de guidage (108) différents, pour être mis en commun et/ou séparément dans le flux de particules,
les éléments de guidage de l'une des installations de guidage (106) assurant la déviation de façon à laisser au moins pratiquement inchangée la largeur d'épandage des éventails d'épandage, largeur mesurée transversalement à la direction de déplacement (116) entre un axe de disque d'épandage (114) et le bord de l'éventail d'épandage, mais que la plage angulaire d'épandage correspondant aux éventails d'épandage soit diminuée, la limite avant des épandages diminués étant située sensiblement transversalement à la direction de déplacement (116) de l'épandeur.

8. Dispositif selon la revendication 7,
**caractérisé en ce que**
l'axe montant (115) se trouve au niveau de la partie (121) de l'autre installation de guidage (107) au voisinage de la première installation de guidage (106) .
